# EUROPÄISCHE PATENTANMELDUNG

(11) **EP 1 750 414 A1**
(43) Veröffentlichungstag der Anmeldung: **07.02.2007**
(21) Anmeldenummer: 06117396.9
(22) Anmeldetag: 18.07.2006
(51) Int. Cl.: H04L 29/06

(54) **Telekommunikationsgerät mit einer drahtlosen Schnittstelle und zugehöriges Verfahren**

(30) Priorität: 04.08.2005 DE 102005036734
(71) Anmelder: ROBERT BOSCH GMBH, 70442 Stuttgart (DE)
(72) Erfinder: Franz, Gerald, 71522, Backnang (DE)

(57) **Zusammenfassung**

Es wird ein Telekommunikationsgerät und es werden Verfahren zum Betrieb eines Telekommunikationsgerätes vorgeschlagen, wobei ein einen zeitlichen Verlauf repräsentierender Dateninhalt in Abhängigkeit der Synchronisierungsinformation im wesentlichen synchron an dem Telekommunikationsgerät und an einem weiteren Telekommunikationsgerät wiedergebbar ist.

## Beschreibung

### Stand der Technik

Die Erfmdung geht aus von einem Telekommunikationsgerät nach der Gattung des Hauptanspruchs. Aus der Druckschrift DE 10 2004 049 502 A1 ist eine Vorrichtung, ein Verfahren bzw. ein System zur Bereitstellung automatisierter Dienste für heterogene Geräte über mehrere Plattformen hinweg bekannt, wobei eine Mehrzahl unterschiedlicher Telekommunikationsgeräte, wie beispielsweise ein Mobiltelefon, ein MP3-Player oder ein digitales Videoaufzeichnungsgerät mit einer Netzwerkumgebung kommunizieren können. Nachteilig ist hieran, dass keine Möglichkeit bereitgestellt wird, dass eine Mehrzahl von individuell ausgewählten Zuhörern gemeinsam, d.h. synchron, beispielsweise ein Musikstück oder dgl. anhören können.

### Vorteile der Erfindung

Das erfindungsgemäße Telekommunikationsgerät mit den Merkmalen des Hauptanspruchs und die erfindungsgemäßen Verfahren zum Betrieb eines Telekommunikationsgerätes mit den Merkmalen der nebengeordneten Verfahrensansprüche haben demgegenüber den Vorteil, dass es einem Benutzer des Telekommunikationsgerätes möglich ist, Informationen, die einen zeitlichen Verlauf aufweisen, wie etwa Audiosignale oder Videosignale, in zeitlich synchronisierter Weise mit einem weiteren Benutzer eines weiteren Telekommunikationsgerätes gemeinsam zu hören, zu sehen bzw. generell zu erleben. Es ist hierdurch erfindungsgemäß vorteilhaft möglich, dass Personengruppen, die ein bestimmtes Musik- oder Filmerlebnis miteinander (und nicht mit anderen) teilen möchten, gemeinsam eine Audio- bzw. eine Videowiedergabe bzw. allgemein ein Signal erleben und miteinander teilen, ohne dass andere sich in unmittelbarer Umgebung befindende Menschen, die ein solches Erlebnis nicht wünschen bzw. die ein anderes Film- und/oder Musikerlebnis wünschen, durch die Wiedergabe der Audio- und/oder Videosignale der Personengruppe gestört werden. Erfindungsgemäß ist es bevorzugt, dass das Signal ein wiedergebbares Audiosignal und/oder ein wiedergebbares Videosignal ist. Dies hat den Vorteil, dass es sich um gängige und weithin verbreitete Möglichkeiten von wiedergebbaren Signalen handelt, die darüber hinaus kostengünstig und einfach speicherbar, transportierbar und wiedergebbar sind. Erfindungsgemäß ist es jedoch auch denkbar, dass andere Signale, wie beispielsweise Signale haptischer Art, kombinierte Signale oder dgl., die einen zeitlich vorgegebenen Verlauf aufweisen, von mehreren Telekommunikationsgräten zeitlich synchronisiert wiedergegeben werden. Erfindungsgemäß ist ferner bevorzugt, dass der Empfang der Synchronisierungsinformation von dem weiteren Telekommunikationsgerät vorgesehen ist und/oder dass das Senden der Synchronisierungsinformation an das weitere Telekommunikationsgerät vorgesehen ist. Hierdurch ist es erfindungsgemäß vorteilhaft möglich, dass die Synchronisierungsinformation zwischen dem Telekommunikationsgerät und dem weiteren Telekommunikationsgerät ausgetauscht wird und damit eine Synchronisierung beider Geräte hervorgerufen wird. Alternativ hierzu ist es erfindungsgemäß auch möglich, dass die Synchronisierungsinformation von dem Telekommunikationsgerät ausgehend von entweder einem dritten Telekommunikationsgerät (unterschiedlich zum weiteren Telekommunikationsgerät) empfangen wird oder aber von einer anderen Einrichtung, wie beispielsweise einem Computerserver oder dgl., erhalten wird. Erfindungsgemäß ist es weiterhin bevorzugt, dass die Schnittstelle als eine lokale, festnetzungebundene Schnittstelle oder auch als eine IP-Schnittstelle (Internet protocol Schnittstelle) vorgesehen ist. Es ist hierdurch erfindungsgemäß besonders vorteilhaft möglich, dass für die zeitliche Synchronisierung mehrerer Telekommunikationsgeräte keine zusätzlichen Kosten, wie beispielsweise Verbindungskosten oder Netzentgelte eines Mobilfunknetzes oder dgl. entstehen. Unter einer lokalen festnetzungebundenen Schnittstelle wird erfindungsgemäß beispielsweise eine Bluetooth-Schnittstelle von Telekommunikationsgeräten verstanden, die über eine solche Schnittstelle miteinander bzw. mit anderen Geräten zu kommunizieren in der Lage ist. Eine andere Möglichkeit einer lokalen festnetzungebundenen Schnittstelle ist beispielsweise eine Infrarot-Schnittstelle, wobei über die Infrarot-Schnittstelle sowohl der Dateninhalt des zeitlich synchron wiederzugebenden Signals als auch die Synchronisierungsinformation übertragen werden kann. Erfindungsgemäß ist weiterhin bevorzugt, dass der Dateninhalt als eine in einem Speicher des Telekommunikationsgerätes speicherbare Datei oder als eine von dem weiteren Telekommunikationsgerät empfangbare Datei vorgesehen ist, insbesondere als eine Audiodatei und/oder eine Videodatei. Hierdurch ist es besonderes vorteilhaft möglich, dass die Verwaltung bzw die Bereitstellung des die wiederzugebenden Signale repräsentierenden Dateninhalts besonders einfach, kostengünstig sowie in einer von vielen Benutzern akzeptierten und bekannten Wiese realisiert wird. Als eine Datei im Sinn der vorliegenden Erfindung ist beispielsweise eine Audiodatei im Kompressionsmodus MP3 zu verstehen oder eine Datei, die gemäß einem anderen Algorithmus komprimiert bzw. allgemein aufgebaut ist. Für eine Videodatei ist insbesondere vorgesehen eine Komprimierung gemäß dem MPEG-Standard (motion picture expert group) vorzunehmen. Erfindungsgemäß ist weiterhin bevorzugt, dass der Dateninhalt als ein von einem dritten Telekommunikationsgerät sowohl zu dem Telekommunikationsgerät als auch zu dem weiteren Telekommunikationsgerät übertragenen Datenstrom vorgesehen ist, insbesondere als Sprachdaten einer Telefonkonferenz. In diesem Fall wird von dem Telekommunikationsgerät und dem weiteren Telekommunikationsgerät ein jeweils empfangener Datenstrom zeitlich synchronisiert in Bezug zueinander wiedergegeben, wobei der Dateninhalt des Datenstroms von dem Dritten Telekommunikationsgerät erst noch erzeugt werden muss bzw. bei dem die Daten für einen späteren Zeitpunkt des zeitlichen Verlaufs zum Beginn des zeitlichen Verlaufs noch nicht feststehen. Es ist in diesem Fall auch nicht möglich, dass der gesamte zeitliche Verlauf des zeitlich zu synchronisierenden Signals bzw. der Wiedergabe des Signals bereits vorab auf das Telekommunikationsgerät (beispielsweise in einen Speicher) übertragen wird, sondern es muss eine stückweise Übertragung bzw. Echtzeitübertragung des zur Wiedergabe vorgesehenen zeitlichen Verlaufs des Signals vorgesehen werden.

Ein weiterer Gegenstand der vorliegenden Erfmdung ist ein Verfahren zum Betrieb eines erfindungsgemäßen Telekommunikationsgerätes gemäß dem ersten nebengeordneten Verfahrensanspruch. Erfindungsgemäß ist es hierdurch besonders vorteilhaft möglich, dass zwei Telekommunikationsgeräte gemäß der vorliegenden Erfindung in besonders einfacher Weise miteinander kommunizieren und hierbei die zeitlich synchrone Wiedergabe eines Signals dadurch ermöglichen, dass der Dateninhalt zunächst in beiden Telekommunikationsgeräten vorliegt und dass anschließend eine zeitlich synchronisierte Wiedergabe des dem Dateninhalt entsprechenden Signals auf beiden Telekommunikationsgeräten ausgelöst wird. Insbesondere liegt der Dateninhalt dadurch auf beiden Telekommunikationsgeräten vor, dass der Dateninhalt vor der Wiedergabe von dem Telekommunikationsgerät zu dem weiteren Telekommunikationsgerät oder umgekehrt übertragen wird. Erfindungsgemäß ist es in diesem Fall besonders bevorzugt, dass das Telekommunikationsgerät in bezug auf die Wiedergabe des Dateninhalts Steuerungsaufgaben an dem weiteren Telekommunikationsgerät übernimmt. Hierbei ergibt sich der besondere Vorteil, dass mittels einer Master-Slave-Konfiguration (Hauptsteuerungs-Nebensteuerungs-Konfiguration), bei der beispielsweise dasjenige Telekommunikationsgerät, welches den Dateninhalt an das andere Telekommunikationsgerät überträgt, auch zumindest teilweise die Steuerung des anderen Telekommunikationsgerätes übernimmt, etwa was die Bestimmung des Zeitpunktes angeht, bei dem die Wiedergabe des Dateninhalts begonnen wird.

Ein weiterer Gegenstand der vorliegenden Erfindung ist ein Verfahren zur Betrieb eines erfindungsgemäßen Telekommunikationsgerätes gemäß dem zweiten nebengeordneten Verfahrensanspruch. Es ist hierbei von besonderem Vorteil, dass auch während der Übertragung zumindest eines Teils des Dateninhalts von dem dritten Telekommunikationsgerät bereits eine zeitlich synchronisierte Wiedergabe sowohl an dem Telekommunikationsgerät als auch an dem weiteren Telekommunikationsgerät ermöglicht wird.

Besonders bevorzugt ist es erfindungsgemäß im Fall beider nebengeordneter Verfahrensansprüche, dass vor einer Wiedergabe des Dateninhalts auf dem Telekommunikationsgerät und dem weiteren Telekommunikationsgerät ein Registrierungsschritt zwischen den beteiligten Telekommunikationsgeräten erfolgt. Hierdurch wird erfindungsgemäß definiert, welche Telekommunikationsgeräte miteinander verbunden eine synchronisierte Wiedergabe durchführen sollen. Es wird hierzu mittels eines Registrierungs- oder Autentifizierungsprotokolls zwischen den Telekommunikationsgeräten bzw. zwischen den Telekommunikationsgeräten und einer dritten Schnittstelle, beispielsweise einem Server oder einem Netzbetreiber oder dgl. die Zusammenstellung einer Gruppe von Teilnehmern bewirkt, welche gemeinsam die Wiedergabe des synchron wiederzugebenen Signals erleben möchten, sei es, dass sich die Teilnehmer einer solchen Gruppe gemeinsam ein Musikstück oder einen Film anschauen möchten oder sei es, dass sich die Teilnehmer der Gruppe an einem gemeinsamen Telefongespräch, wie etwa einer Telefonkonferenz oder dgl. beteiligen möchten.

### Zeichnung

Ausführungsbeispiele der Erfindung sind in der Zeichnung dargestellt und in der nachfolgenden Beschreibung näher erläutert.

Es zeigen
Figur 1 eine schematische Darstellung der grundsätzlichen Anordnung eines Telekommunikationsgerätes und eines weiteren Telekommunikationsgerätes zur synchronen Wiedergabe eines Signals,
Figur 2 eine schematische Darstellung des Signalaustauschs zwischen den Telekommunikationsgeräten zur Erzielung einer zeitlich synchronisierten Wiedergabe und
Figur 3 eine schematische Anordnung einer Gruppe von Telekommunikationsgeräten, die erfindungsgemäß miteinander in Verbindung treten können.

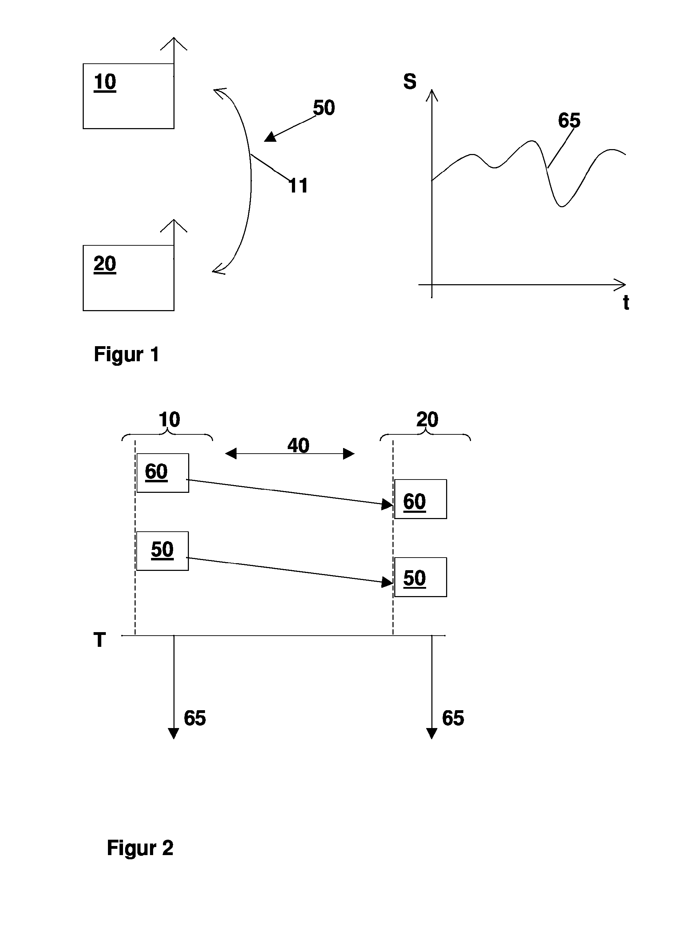

In Figur 1 ist ein erfindungsgemäßes Telekommunikationsgerät 10 und ein weiteres Telekommunikationsgerät 20 dargestellt, welche miteinander gemäß einer bzw. über eine Schnittstelle 11 in Verbindung treten können. Die Schnittstelle 11 ist erfindungsgemäß insbesondere als drahtlose Schnittstelle, beispielsweise als Funkschnittstelle oder als Infrarotschnittstelle oder dgl. vorgesehen. Das Telekommunikationsgerät 10 und das weitere Telekommunikationsgerät 20 können identische Geräte sein, so dass die unterschiedlichen Bezeichnungen lediglich zur Differenzierung der beiden Geräte 10, 20 eingesetzt werden. Es kann sich erfindungsgemäß bei den Telekommunikationsgeräten 10, 20 jedoch auch um unterschiedliche Arten von Geräten 10, 20 handeln, die jedoch insbesondere hinsichtlich der Schnittstelle 11 miteinander in Kontakt treten können und eine Anzahl von Funktionen teilen bzw. synchronisieren können. So ist es beispielsweise möglich, dass die Wiedergabemöglichkeiten des Telekommunikationsgerätes 10 und des weiteren Telekommunikationsgerätes 20 verschieden sind, etwa weil unterschiedliche Lautsprecher bzw. Kopfhörer oder dgl. Verwendung finden. Weiterhin können unterschiedliche Audiofunktionalitäten vorhanden sind, etwa Stereofähigkeit bei dem einen Gerät und lediglich eine Mono-Funktionalität auf den anderen Telekommunikationsgerät. Weiterhin ist es erfindungsgemäß insbesondere hinsichtlich Bildwiedergaben bzw. Videowiedergaben möglich, dass die Anzeigeeinrichtungen (nicht dargestellt) zur Wiedergabe der beispielsweise Videodateien bei dem Telekommunikationsgerät 10 und dem weiteren Telekommunikationsgerät 20 unterschiedlich ausgebildet sind. Solche möglichen Unterschiede zwischen dem Telekommunikationsgerät 10 und dem weiteren Telekommunikationsgerät 20 sind erfindungsgemäß im wesentlichen unerheblich. Maßgebend ist, dass erfindungsgemäß mittels eines Synchronisierungssignals 50 bzw. mittels einer Synchronisierungsinformation 50, die über die den beiden Geräten 10, 20 gemeinsame Schnittstelle 11 übertragen werden kann, eine synchronisierte Wiedergabe eines Signals S sowohl auf dem Telekommunikationsgerät 10 als auch auf dem weiteren Telekommunikationsgerät 20 möglich ist. Das Signal S weist hierbei einen zeitlichen Verlauf 65, welcher im rechten Teil der Figur 1 über einer Zeitachse beispielhaft aufgetragen ist. Bei dem Signal S bzw. dem zeitlichen Verlauf 65 des Signals kann es sich erfindungsgemäß um ein beliebiges, zeitlich koordiniertes Signals, wie beispielsweise ein Musikstück oder ein Film oder eine sonstige denkbare, zeitlich koordinierte Signalart handeln. Wesentlich ist erfindungsgemäß, dass es sich bei dem zeitlichen Verlauf 65 des Signals tatsächlich um eine für einen Benutzer des erfindungsgemäßen Telekommunikationsgerätes 10 wahrnehmbaren zeitlichen Verlauf des Signals handelt, der auf die Sinnesorgane eines Benutzers des Telekommunikationsgerätes 10 bzw. des weiteren Telekommunikationsgerätes 20 einwirkt und diese hierauf sensibel sind. So hätte im Sinne der vorliegenden Erfmdung lediglich die Übertragung beispielswiese eines Textes oder einer sonstigen Information, wie beispielsweise einer Routeninformation oder einer Wetterinformation, keinerlei zeitlichen Verlauf, da eine solche Information von unterschiedlichen Benutzern in unterschiedlichster Weise wahrgenommen bzw. verarbeitet werden kann. Falls es sich jedoch bei dem Signal um die Wiedergabe einer Lesung des gleichen Textes bzw. bei der Wetterinformation um die Wiedergabe eines Videoclips mit einer Wettvorhersage handelt, dann handelt es sich um ein Signal mit einem zeitlichen Verlauf, welches auf mehreren Telekommunikationsgeräten 10, 20 in synchronisierter Weise wiedergegeben werden kann.

In Figur 2 ist ein spezielles Beispiel für den Signalaustausch zwischen dem Telekommunikationsgerät 10 und dem weiteren Telekommunikationsgerät 20 schematisch dargestellt. Mit dem Bezugszeichen 40 ist ein Registrierungsschritt zwischen den Telekommunikationsgräten 10, 20 bezeichnet, während dem festgelegt wird, dass beide Telekommunikationsgeräte 10, 20 überhaupt in der Lage sind miteinander zu kommunizieren und miteinander zur zeitlich synchronisierten Wiedergabe eines zeitlichen Verlaufs 65 eines Signals zu kooperieren. Nachfolgend wird in einem speziellen Ausführungsbeispiel der vorliegenden Erfindung ein das Signal bzw. seinen zeitlichen Verlauf 65 repräsentierender Dateninhalt 60 in dem Telekommunikationsgerät 10 zu dem weiteren Telekommunikationsgerät 20 übertragen. Dies ist schematisch mittels eines Pfeils zwischen zwei mit den Bezugszeichen 60 versehenen Blöcken in Figur 2 dargestellt. Im Anschluss daran wird im dargestellten Ausführungsbeispiel der Figur 2 das Synchronisierungssignal 50 bzw. die Synchronisierungsinformation 50 ebenfalls von dem Telekommunikationsgerät 10 zu dem weiteren Telekommunikationsgerät 20 übertragen, was ebenfalls mittels eines Pfeils und zweier mit dem Bezugszeichen 50 versehener Blöcke dargestellt ist. Mittels des Synchronisierungssignals 50 wird ein in Figur 2 mittels des Bezugszeichnens T bezeichneter Zeitpunkt definiert, zu dem bei beiden Telekommunikationsgeräten 10, 20 der zeitliche Verlauf 65 der Wiedergabe des Signals gestartet bzw. vorgenommen wird. Hierdurch ist die erfindungsgemäß gewünschte, zeitliche Synchronisierung der Wiedergabe des Signals auf beiden Telekommunikationsgeräten 10, 20 verwirklicht. In Abänderung des in Figur 2 dargestellten Ausführungsbeispiels ist es selbstverständlich erfmdungsgemäß auch möglich, dass der Dateninhalt 60 beispielsweise vom weiteren Telekommunikationsgerät 20 zum Telekommunikationsgerät 10 übertragen wird und/oder dass die Synchronisierungsinformation 50 vom weiteren Telekommunikationsgerät 20 zum Telekommunikationsgerät 10 übertragen wird. Weiterhin kann das Synchronisierungssignal 50 bzw. die Synchronisierungsinformation 50 auch zeitlich vor dem Dateninhalt 60 oder auch gemeinsam oder zwischen verschiedenen Teilen des Dateninhaltes 60 übertragen werden. Es ist hierdurch erfindungsgemäß möglich, dass tragbare Audio- bzw. Videogeräte, wie z.B. ein Walkman, ein MP3-Player, ein Mobiltelefon oder dgl., welche eine sehr gute Tonwiedergabe beispielsweise über Kopf- oder Ohrhörer ermöglichen, eine Wiedergabe der Toninformation oder auch eine vorhandene Videoinformation für einen individuell ausgewählten Zuhörerkreis ermöglichen. Bei den Audiogeräten bzw. den Telekommunikationsgeräten 10, 20 handelt es sich erfindungsgemäß bevorzugt um tragbare Geräte mit einem Kopf- und/oder Ohrhörer. Durch die Erfindung ist dann ein synchrones, gemeinschaftliches Hören, beispielsweise von Musik oder auch eines Videos innerhalb einer Personengruppe möglich. Weiterhin ist es möglich, dass eine lokale Konferenzschaltung für mehrere Mobiltelefone erzielt wird, ohne dass zusätzliche Verbindungskosten für die lokale Konferenzschaltung anfallen.

Nach dem Überspielen des Dateninhalts 60 an die beteiligten Audiogeräte bzw. allgemein an die beteiligten Telekommunikationsgeräte findet beispielsweise im Rahmen der Übertragung der Synchronisierungsinformation eine Übermittlung der aktualisierten Wiedergabeinformation statt, also etwa die Information, welche der in beiden Telekommunikationsgeräten vorhandenen MP3-Dateien synchron abgespielt werden soll, welche Wiedergabeposition innerhalb einer MP3-Datei zuerst angesteuert werden soll und dgl. mehr.

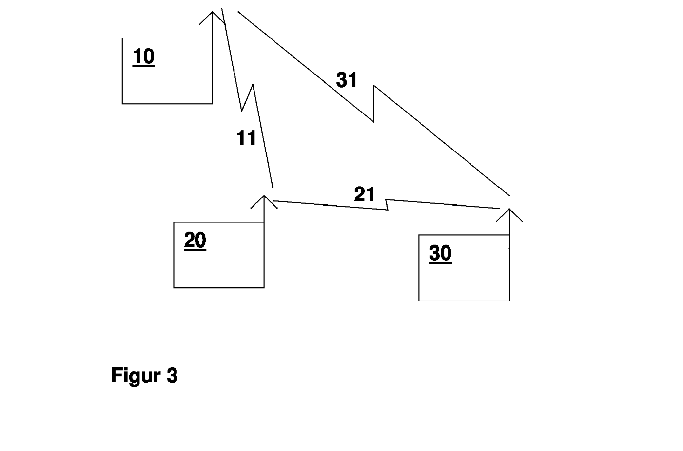

In Figur 3 ist beispielhaft eine schematische Kommunikationssituation des erfmdungsgemäßen Telekommunikationsgerätes 10, des weiteren Telekommunikationsgerätes 20 und eines dritten Telekommunikationsgerätes 30 dargestellt. Das Telekommunikationsgerät 10 und das weitere Telekommunikationsgerät 20 ist mittels der bereits oben beschriebenen Schnittstelle 11 miteinander verbunden. Mittels einer ähnlichen Art von Schnittstelle oder auch mittels einer anderen Art von Schnittstelle 21 ist das weitere Telekommunikationsgerät 20 mit dem dritten Telekommunikationsgerät 30 verbunden. Mittels einer dritten Schnittstelle 31 ist das dritte Telekommunikationsgerät 30 mit dem Telekommunikationsgerät 10 verbunden bzw. zumindest verbindbar. Es ist hierdurch erfindungsgemäß möglich, dass eine synchronisierte Wiedergabe bereits vorhandener Audiodaten, beispielsweise in Form von MP3-Dateien, oder auch Videodateien, auf mehreren Telekommunikationsgeräten 10, 20, 30 möglich ist. Es ist erfindungsgemäß jedoch auch möglich, dass eine lokale drahtlose Übertragung von aktuellen Audio- und/oder Videodaten, d. h. solchen Daten, die zum Zeitpunkt des Beginns einer Wiedergabe zumindest noch nicht vollständig feststehen, übertragen werden. Hierzu ist es beispielsweise erfindungsgemäß möglich, dass eine Mehrzahl von Mobilfunktelefonen vernetzt wird und dass eine lokale Telefonkonferenz ohne zusätzliche Telefonkosten möglich ist, was beispielsweise ein vertrautes Mithören ohne eine Freisprecheinrichtung ermöglicht.

Im Fall einer Echtzeitübertragung des Dateninhalts 60 während der Wiedergabe ist bei der drahtlosen Verbindung über die Schnittstellen 11, 21, 31 eine hinreichend große Bandbreite zwischen den vernetzten Wiedergabegeräten bzw. den vernetzten Telekommunikationsgeräten 10, 20, 30 erforderlich. Bei entsprechender Ausgestaltung ist eine bidirektionale Übertragung möglich, d.h. jeder Teilnehmer kann seinen Beitrag einbringen, z. B. jedes der Beteiligten Mobilfunkgeräte kann gleichzeitig eine Mobilfunkverbindung und die lokale Verbindung, beispielsweise im Sinne einer lokalen Telefonkonferenz, aufbauen.

## Patentansprüche

1. Telekommunikationsgerät (10) mit einer drahtlosen Schnittstelle (11), **dadurch gekennzeichnet, dass** die Schnittstelle (11) zum Empfang einer Synchronisierungsinformation (50) und/oder zum Senden einer Synchronisierungsinformation (50) vorgesehen ist, wobei ein einen zeitlichen Verlauf (65) eines Signals repräsentierender Dateninhalt (60) in Abhängigkeit der Synchronisierungsinformation (50) an dem Telekommunikationsgerät (10) und an einem weiteren Telekommunikationsgerät (20) derart wiedergebbar ist, dass die am Telekommunikationsgerät (10) und am weiteren Telekommunikationsgerät (20) wiedergegebenen Signale im wesentlichen synchron vorgesehen sind.

2. Telekommunikationsgerät (10) nach Anspruch 1, **dadurch gekennzeichnet, dass** das Signal ein wiedergebbares Audiosignal und/oder ein wiedergebbares Videosignal ist.

3. Telekommunikationsgerät (10) nach einem der vorhergehenden Ansprüche, **dadurch gekennzeichnet, dass** der Empfang der Synchronisierungsinformation (50) von dem weiteren Telekommunikationsgerät (20) vorgesehen ist und/oder dass das Senden der Synchronisierungsinformation (50) an das weitere Telekommunikationsgerät (20) vorgesehen ist.

4. Telekommunikationsgerät (10) nach einem der vorhergehenden Ansprüche, **dadurch gekennzeichnet, dass** die Schnittstelle (11) als eine lokale funknetzungebundene oder als eine IP-Schnittstelle (11) (Internet protocol Schnittstelle) vorgesehen ist.

5. Telekommunikationsgerät (10) nach einem der vorhergehenden Ansprüche, **dadurch gekennzeichnet, dass** der Dateninhalt (60) als eine in einem Speicher (12) des Telekommunikationsgerätes (10) speicherbare Datei (61) oder als eine von dem weiteren Telekommunikationsgerät (20) empfangbare Datei (61) vorgesehen ist, insbesondere als eine Audio-Datei und/oder Video-Datei.

6. Telekommunikationsgerät (10) nach einem der vorhergehenden Ansprüche, **dadurch gekennzeichnet, dass** der Dateninhalt (60) als ein von einem dritten Telekommunikationsgerät sowohl zu dem Telekommunikationsgerät (10) als auch zu dem weiteren Telekommunikationsgerät (20) übertragener Datenstrom vorgesehen ist, insbesondere als Sprachdaten einer Telefonkonferenz.

7. Verfahren zum Betrieb eines Telekommunikationsgerätes (10) gemäß einem der vorhergehenden Ansprüche, **dadurch gekennzeichnet, dass** in einem ersten Schritt der Dateninhalt (60) von dem Telekommunikationsgerät (10) zum weiteren Telekommunikationsgerät (20) oder umgekehrt übertragen wird, und dass in einem zweiten Schritt in Abhängigkeit der Synchronisierungsinformation (50) die Wiedergabe des Dateninhalts (60) auf dem Telekommunikationsgerät (10) und dem weiteren Telekommunikationsgerät (20) synchronisiert erfolgt.

8. Verfahren nach Anspruch 7, **dadurch gekennzeichnet, dass** das Telekommunikationsgerät (10) in Bezug auf die Wiedergabe des Dateninhalts (60) Steuerungsaufgaben an dem weiteren Telekommunikationsgerät (20) übernimmt.

9. Verfahren zum Betrieb eines Telekommunikationsgerätes (10) gemäß einem der Ansprüche 1 bis 6, **dadurch gekennzeichnet, dass** während der Übertragung des Dateninhalts (60) von dem dritten Telekommunikationsgerät (30) sowohl zum Telekommunikationsgerät (10) als auch zum weiteren Telekommunikationsgerät (20) in Abhängigkeit der Synchronisierungsinformation (50) die Wiedergabe des Dateninhalts (60) auf dem Telekommunikationsgerät (10) und auf dem weiteren Telekommunikationsgerät (20) im wesentlichen synchronisiert erfolgt.

10. Verfahren nach einem der Ansprüche 7 bis 9, **dadurch gekennzeichnet, dass** vor einer Wiedergabe des Dateninhalts (60) auf dem Telekommunikationsgerät (10) und dem weiteren Telekommunikationsgerät (20) ein Registrierungsschritt (40) zwischen den beteiligten Telekommunikationsgeräten (10, 20, 30) erfolgt.
